# EUROPÄISCHE PATENTSCHRIFT

(11) **EP 4 264 175 B1**
(45) Veröffentlichungstag und Bekanntmachung des Hinweises auf die Patenterteilung: **01.10.2025**
(21) Anmeldenummer: 21834719.3
(22) Anmeldetag: 15.12.2021
(51) Int. Cl.: G01B 11/02, B29L 23/18, B29C 48/13, G01B 11/24, G01B 11/22, G01B 11/08, G01B 11/06

(54) **THZ-MESSVORRICHTUNG UND THZ-MESSVERFAHREN ZUM VERMESSEN EINES WELLROHRS**
THZ MEASURING DEVICE AND THZ MEASURING METHOD FOR PERFORMING A MEASUREMENT ON A CORRUGATED PIPE
DISPOSITIF ET PROCÉDÉ DE MESURE DE THZ POUR RÉALISATION D'UNE MESURE SUR UN TUBE ONDULÉ

(30) Priorität: 16.12.2020 DE 102020133704
(43) Veröffentlichungstag der Anmeldung: 25.10.2023
(73) Patentinhaber: CiTEX Holding GmbH, 49324 Melle (DE)
(72) Erfinder: NEUMEISTER, Arno, 32457 Porta Westfalica (DE); PETERMANN, Jan Hendrik, 49328 Melle (DE)
(74) Vertreter: Bremer, Ulrich
(86) Internationale Anmeldenummer: PCT/DE2021/101006
(87) Internationale Veröffentlichungsnummer: WO 2022/127995

(56) Entgegenhaltungen:
- WO-A1-2020/200360
- CN-A- 110 672 549
- DE-A1- 102015 122 205
- DE-A1- 102016 114 325
- US-A1- 2016 265 901
- US-A1- 2018 112 973

## Beschreibung

Die Erfindung betrifft eine THZ-Messvorrichtung und ein THz- Messverfahren zum Vermessen eines Wellrohrs.

Wellrohre aus Kunststoff oder anderen thermoplastischen Materialien weisen eine Struktur aus alternierenden Wellen und Tälern, ggf. mit zusätzlichen Strukturen wie Fittings (Innenmuffe, Spigot) und Außenmuffen (Bell) auf und dienen insbesondere zur Verlegung von Leitungen und Kabeln und auch zum Transport von Fluiden. Durch die Wellung weisen die Wellrohre eine hohe Biegsamkeit und Flexibilität bei dennoch hoher Steifigkeit gegenüber einwirkenden Kräften, insbesondere Belastungen senkrecht zu ihrer Längsachse, auf. Wellrohre zum Transport von Fluiden weisen im Allgemeinen ein durchgängiges Innenrohr auf, so dass zwischen einer Welle (Berg) und dem Innenrohr eine Luftkammer ausgebildet ist. Die Wellen können insbesondere in Umfangsrichtung umlaufend sein; es sind weiterhin auch Ausbildungen mit schraubenförmigen bzw. spiralförmigen Wellen bekannt.

Zur Herstellung wird im Allgemeinen ein Kunststoff-Rohr aus einem Extruder vorgefertigt und durch einen wellformgebenden Corrugator mit den Strukturen ausgebildet. Nachfolgend kann eine Vermessung des Wellrohrs und seiner ausgebildeten Strukturen vorgesehen sein, um Leckagen und Schwächen, z. B. Lunker in dem Kunststoffmaterial zu detektieren und die Schichtdicken zu überprüfen.

THz -Vermessungen von Rohren ermöglichen allgemein eine berührungsfreie Vermessung von Abständen, Durchmessern und Schichtdicken, indem ein THz-Sendestrahl durch das Rohr gelangt und an Grenzflächen reflektiert wird. Hierzu wird im Allgemeinen der THz - Sendestrahl auf eine Rohrachse des Rohres fokussiert, um z. B. eine Vermessung eines vorderen und hinteren Wandbereichs des Rohres zu ermöglichen.

Eine Vermessung von Wellrohren ist hingegen im Allgemeinen komplex, da die Strukturen in unterschiedlichen Abständen von der Rohrachse ausgebildet sind und nur zum Teil parallel zur Rohrachse verlaufende Flächen aufweisen.

Die DE 10 2016 114 325 A1 zeigt ein Verfahren mit den Schritten des Abtastens einer ersten lackierten Oberfläche eines ersten Fahrzeugs mit zwei oder mehr Lackschichten mittels eines robotergesteuerten Terahertzstrahlungsgeräts, wobei Daten zur Dicke einer ersten lackierten Oberfläche erhalten werden und eine Abbildung für jede der zwei oder mehr Lackschichten erhalten wird. Weiterhin wird die erste Ausbildung der Dicke mit einer Kontrollabbildung verglichen, und es erfolgt ein Anpassen eines oder mehrerer Lackaufbringparameter basierend auf einem Vergleich der ersten Abbildung der Dicke mit der Kontrollabbildung, um eine zweite Oberfläche eines zweiten Fahrzeugs zu lackieren.

Die DE 10 2018 126 652 A1 zeigt ein Verfahren und System zum Ausrichten eines Terahertz-Sensorsystems mit einer Zielfläche. Dieses Verfahren beinhaltet die Schritte des Scannens eines ausgewählten Bereichs der Zielfläche mit einem Terahertz-Strahlenbündel, das von dem Strahlerkopf emittiert wird, Erfassen einer Spitzenamplitude für jedes reflektierte Strahlungssignal von einer Vielzahl reflektierter Strahlungssignale, die von dem Strahlerkopf während des Scannens des ausgewählten Bereichs empfangen wird, und ein Identifizieren einer senkrechten Position des Strahlerkopfes in Bezug auf die Zielfläche basierend auf einer maximalen Spitzenamplitude unter den Spitzenamplituden der reflektierten Strahlungssignale.

Die EP 3 742 191 A1 beschreibt eine THz-Messvorrichtung und ein Verfahren zum Betreiben einer derartigen Terahertz-Messvorrichtung. Hierbei wird ein THz-Signal auf ein zu vermessendes Objekt ausgestrahlt und ein von dem Objekt reflektierter Anteil des THz-Signals empfangen, wobei der THz-Sender und der THz-Empfänger in einem Messkopf der Messvorrichtung vorgesehen sind. Bei dem Messverfahren wird ein Abstand zwischen dem Messkopf und dem zu vermessenden Objekt variiert.

Die DE 10 2015 122 205 A1 beschreibt ein THZ-Messverfahren und eine Terahertz-Messvorrichtung zum Ermitteln einer Schichtdicke oder eines Abstandes eines Messobjektes, wobei mindestens ein Terahertz-Strahl von einer Terahertz-Sende-und Empfangseinheit entlang einer optischen Achse auf das Messobjekt eingestrahlt und durch mindestens eine Schicht des Messobjekts gelangte und reflektierte Terahertz-Strahlung detektiert wird. Hierbei wird ein Messsignal der detektierten reflektierten Terahertz-Strahlung ausgewertet und eine Schichtdicke ermittelt, wobei mehrere Messungen mit unterschiedlichen optischen Abständen durchgeführt werden.

Aus der DE 10 2019 108 299 A1 sind eine THz-Messvorrichtung und ein THz- Messverfahren zum Ermitteln einer Schichtdicke oder eines Abstandes eines Messobjektes bekannt, bei denen von einer Sende-und Empfangseinheit Terahertz-Strahlung emittiert und reflektierte Terahertz-Strahlung detektiert wird. Im Strahlengang ist eine verstellbare Optikeinheit mit einem Reflektor angeordnet, die die ausgesandte und/oder reflektierte Terahertz-Strahlung ablenkt, zum Einstellen der optischen Achse der Sende-und Empfangseinheit. Der Reflektor ist hierbei verformbar ausgebildet.

Die WO 2005/019810 A2 beschreibt ein Untersuchungssystem mit einem Fokussier-Glied, wobei das Untersuchungs-System THz Strahlung durch das Fokussier-Glied ausgibt, wobei das Fokussier-Glied eine fokussierende Oberfläche mit ellipsoidaler Form aufweist.

US 2018112973 A1 zeigt eine Einrichtung zum Messen eines Durchmessers oder einer Wanddicke eines Stranges mit kreisförmigem Querschnitt, der durch die Messvorrichtung geführt wird. Ein Sender sendet Terahertz-Strahlung aus, ein optisches System leitete die THz-Strahlung zu dem Strang und ein Reflektor ist gegenüber dem Sender und hinter dem Strang vorgesehen, wobei ein Empfänger reflektierte Strahlung empfängt und nachfolgend der Durchmesser und/oder die Wanddicke ermittelt wird.

CN 11067254 A beschreibt ein Verfahren zur Bilderzeugung, bel dem entsprechend einem dreidimensionalen Positionsmodell des Messobjektes eine erste Bildposition eingestellt wird, um eine zweiter Bildposition zu erreichen, in der ein an dem Messobjekt reflektiertes Terahertzwellensignal aufgenommen wird, wobei aufgrund der Messwerte eine dreidimensionale Bildkonstruktion durchgeführt wird.

US 2016265901 A1 zeigt eine Vorrichtung zur Darstellung eines Extrusionsproduktes während der Produktion, um eine Qualitätskontrolle durch eine kontinuierliche Vermessung dreidimensionaler Parameter durchzuführen und Verunreinigungen zu ermitteln. Hierbei wird ein Vorhang aus parallelen Strahlen von Terahertzstrahlung ausgegeben und nachfolgend eine Bildanalyse durchgeführt.

Der Erfindung liegt die Aufgabe zugrunde, ein THz -Messverfahren und eine THz -Messvorrichtung zu schaffen, die eine sichere Vermessung eines durchlaufenden Wellrohrs ermöglichen.

Diese Aufgabe wird durch ein THz -Messverfahren und eine THz -Messvorrichtung nach den unabhängigen Ansprüchen gelöst. Die Unteransprüche beschreiben bevorzugte Weiterbildungen.

Das erfindungsgemäße THz-Messverfahren kann insbesondere mit der erfindungsgemäßen THz-Messvorrichtung ausgeführt werden; die erfindungsgemäße THz-Messvorrichtung ist insbesondere zur Ausführung eines erfindungsgemäßen THz-Messverfahrens vorgesehen.

Der THz-Transceiver kann eine direkte Laufzeitmessung, und/oder eine Frequenzmodulation des THz-Sendestrahls vornehmen, und/oder mit gepulstem THz-Sendestrahl ausgebildet sein. Er kann insbesondere ein frequenzmodulierter kontinuierlicher Radarstrahl sein.

Die Frequenz des THz -Sendestrahls kann im Bereich von 10 GHz bis 50 THz, insbesondere 50 GHz bis 10 THz liegen. Somit kann die THz-Strahlung auch im Frequenzbereich von Mikrowellenstrahlung und/oder Radarstrahlung liegen.

Als THz-Transceiver wird grundsätzlich eine Kombination aus einem THz-Sender (THz-Transmitter) und einem THz-Empfänger (THz-Receiver) bezeichnet, Diese können insbesondere als bauliche Einheit, z.B. auch kombinierter Schwingkreis ausgebildet sein; sie können aber grundsätzlich auch getrennt angeordnet sein, z.B. mit Kopplung über einen halbdurchlässigen Spiegel.

Erfindungsgemäß erfolgt somit eine THz-Vermessung eines Wellrohrs, insbesondere eines kontinuierlich durch die THz-Messvorrichtung geförderten Wellrohrs. Hierbei ist eine Vormessung mittels einer Detektionseinrichtung vorgesehen, bei der eine Position oder ein Abstand einer Außenfläche des Wellrohrs detektiert wird. Die Detektionseinrichtung kann ein Abstandssensor sein. Hierbei kann der Abstandssensor, insbesondere eine Laser-Messeinrichtung bzw. ein Lidar zur Messung der Position sein, insbesondere als Linienlaser oder Abstandslaser, weiterhin auch ein Radar, insbesondere ein Frequency Modulated Continous Wave Radar (FMCW).

Erfindungsgemäß wird hierbei erkannt, dass durch eine derartige Detektionseinrichtung bereits bei Ermittlung lediglich der Außenfläche des Wellrohrs eine eindeutige Zuordnung und Erkennung der Strukturposition, d. h. einer Welle und/oder eines Tals, ergänzend vorzugsweise einer weiteren Struktur wie Fitting (Innenmuffe) oder Außenmuffe, möglich ist.

Erfindungsgemäß kann nach der Ermittlung der Struktur oder Strukturposition nachfolgend die THz-Messung auf die zuvor erkannte Struktur ausgerichtet werden und/oder die ermittelten Schichtdicken und/oder Wanddicken und/oder Durchmesser der jeweiligen Struktur des Wellrohres zugeordnet werden.

Gemäß einer Ausführungsform kann eine feste Fokussierung für die unterschiedlichen Messungen vorgesehen sein. Somit kann der Fokus der Sensoren und/oder der Fokus der aus Sensoren und optischen Anordnung auf einen festen Wert, insbesondere einen Nenndurchmesser eines kleinsten für die Messeinrichtung vorgesehenen Wellrohres, ausgelegt sein, so dass insbesondere die Sensoren in einem festen Abstand zur Symmetrieachse des Messraums bleiben. Durch die Fokussierung auf das kleinste Rohr ist dort auch der Brennfleck am kleinsten. Das ist vorteilhaft, da im Allgemeinen beim kleinsten Rohr auch die kleinsten Strukturen (Wellen/Täler) vorliegen. Bei einem zu großen Brennfleck können hingegen mehrere Strukturen in einer Messung erfasst werden, wodurch es zu messtechnischen Problemen kommen kann.

Gemäß einer hierzu alternativen Ausführungsform wird die Fokussierung verändert. Hierbei wird vorzugsweise der THz-Sendestrahl auf einen Brennfleck fokussiert, der in einem Messabstand relativ zu der Rohrachse oder Symmetrieachse eingestellt wird. Der Messabstand wird hierbei vorzugsweise in Abhängigkeit der zuvor erkannten Strukturposition eingestellt. Somit ist vorteilhafterweise nicht eine Fokussierung auf die Rohrachse vorgesehen, wie es im Allgemeinen bei herkömmlichen THz-Vermessungen eines Rohres bzw. Glattrohres vorgesehen ist, sondern gezielt eine Einstellung des Brennflecks auf Strukturen des Wellrohrs. So kann z. B. der THz-Sendestrahl auf eine Außenwand einer Welle und nachfolgend auf die Innenwand der Welle fokussiert werden, bei einem Tal kann der THz-Sendestrahl direkt auf das Tal, das z.B. auch dem Innenrohr entsprechen kann, fokussiert werden. Im Fall anderer Strukturen können entsprechend ein oder mehrere Messabstände eingestellt werden.

Zur Fokussierung des THz -Sendestrahls und Aufnahme des Reflexionsstrahls ist vorzugsweise eine optische Anordnung, insbesondere mit einer Linse, vor dem Transceiver, insbesondere dem Transceiver-Chip, vorgesehen.

Erfindungsgemäß erfolgt die Fokussierung insbesondere durch Längsverstellung des THz-Transceivers, insbesondere der Anordnung aus THz-Transceiver mitsamt der optischen Anordnung. Somit wird insbesondere nicht z. B. die Linse gegenüber dem Transceiver oder Transceiver-Chip verstellt, sondern die Anordnung aus THz-Transceiver und Linse bzw. optischer Anordnung bleibt relativ zueinander fest und wird zu dem Messraum hin und weg verstellt, da erfindungsgemäß hierdurch eine bessere und genauere Fokussierung erreicht wird.

Erfindungsgemäß wird erkannt, dass eine Fokussierung auf die Rohrachse auch aufgrund der Strukturen problematisch ist, da der zu fokussierende THz-Strahl in den unterschiedlichen Positionen durch die unterschiedlichen Strukturen des Wellrohrs unterschiedlich beeinflusst wird, z. B. auch an Kanten und senkrecht oder schräg verlaufenden Flächen. Somit ermöglicht die zunächst aufwändig erscheinende Fokussierung auf unterschiedliche Messabstände eine genauere Vermessung.

Bei der THz-Vermessung können jeweils Abstände und/oder Schichtdicken ermittelt werden, insbesondere ein oder mehrere der folgenden Größen:
ein Außendurchmesser und/oder Innendurchmesser einer Struktur wie z.B.
einer Welle oder auch eines Innenrohres,
Schichtdicken sämtlicher Schichten und Flächen, d.h. insbesondere eine Außenwand einer Welle, einer Innenwand einer Welle, eines Innenrohrs und/oder eines Tals,
die Schichtdicke einer Luftschicht zwischen der Außenwand der Welle und der Innenwand oder dem Innenrohr.

Erfindungsgemäß können weiterhin aus den direkten Messdaten ergänzende Eigenschaftswerte ermittelt werden, z. B. indirekt berechnete und/oder statistische Werte wie eine innere Rauigkeit, die sich aus den Differenzen des Innendurchmessers oder Innenrohrs an den verschiedenen Strukturbereichen ergibt, d. h. insbesondere an den Wellen und Tälern, wobei die innere Rauigkeit sich z.B. auf den Transport von Fluiden auswirkt.

Erfindungsgemäß können ein oder mehrere THz -Transceiver vorgesehen sein, z. B. mehrere THz-Transceiver in Umfangsrichtung um den Messraum bzw. das Wellrohr herum angeordnet. Neben einer statischen Anordnung, wo an ein oder mehreren Stellen im Umfang gemessen wird, können auch insbesondere einer oder mehrere THz-Transceiver reversierend oder rotierend um das Messrohr herumfahren, um eine vollumfängliche Vermessung zu ermöglichen.

Da die Vermessung des Wellrohrs, insbesondere bei reversierendem Umlaufen und bei Fokussierung auf unterschiedliche Radialpositionen der Strukturen relativ zeitaufwändig ist, kann zur Vermessung eines durchlaufenden Wellrohrs eine zyklische Längsverstellung des THz-Transceivers vorgesehen sein. Hierbei ist insbesondere ein Schlitten vorgesehen, der in Längsrichtung bzw. Förderrichtung des Wellrohrs mit verstellt wird und somit eine feste oder relativ feste Relativposition des THz-Transceivers zu dem Wellrohr ermöglicht, so dass die relativ zeitaufwändigen Vermessungen ermöglicht werden.

Erfindungsgemäß wird insbesondere ein verbessertes Verfahren zum Herstellen von Wellrohren geschaffen, das eine kontinuierliche Onlinevermessung ermöglicht, bei der bei Vermessung von Abweichungen direkt ein Eingriff in den Produktionsprozess, insbesondere durch Ansteuerung des Extruders und/oder des Corrugators, möglich ist.

Die Detektionseinrichtung kann vorteilhafterweise bei Einsatz eines Lasers den Laserstrahl zyklisch bzw. periodisch ablenken, insbesondere von der rein radialen Richtung aus in Längsrichtung schwenken, um die Strukturen des Wellrohrs, d. h. Täler und Wellen besser zu erfassen. Somit wird durch den schräg verlaufenden Laserstrahl auch z.B. eine Erfassung der seitlichen Flächen der Wellen und Fittings ermöglicht, die keine senkrecht zum THz-Strahl verlaufenden Flächen darstellen.

Hierbei kann eine schnelle Schwenkbewegung oder Rotation des Laserstrahls mit hoher Verstellgeschwindigkeit bzw. Rotation relativ zu der Fördergeschwindigkeit des Wellrohrs vorgesehen sein, so dass gründliche Vermessungen der verschiedenen Strukturen möglich sind. Erfindungsgemäß wird hierbei erkannt, dass dies mit relativ geringem Aufwand und hoher Messsicherheit durch z. B. einen fest aufgesetzten Detektionskopf, der einen Laserstrahl auf einen verstellbaren, z.B. rotierenden. Spiegel ausgibt, ermöglicht wird.

Das Wellrohr kann insbesondere kontinuierlich durch die Messvorrichtung gefördert und in der Messvorrichtung vermessen werden. Die Ermittlung der Abstände und Schichtdicken und von indirekt abgeleiteten Eigenschaftswerten wie der inneren Rauigkeit, sowie gegebenenfalls ein Vergleich mit Referenzwerten kann online bzw. während der Messung, aber auch offline, d.h. unabhängig von der Messung erfolgen.

Gemäß weiterer Aspekte sind eine Anordnung und ein Verfahren zur Herstellung von Wellrohren unter Einsatz des Verfahrens und/oder der Messvorrichtung vorgesehen.

Bei der erfindungsgemäßen Anordnung sind vorgesehen: eine THz-Messvorrichtung, ein in dem Messraum aufgenommenes Wellrohr, eine Fördereinrichtung zum Fördern des Wellrohrs entlang seiner Längsachse und/oder der Symmetrieachse der THz-Messvorrichtung durch den Messraum, und eine Herstellvorrichtung zum Herstellen des Wellrohrs, insbesondere mit Extruder zum Extrudieren und nachfolgendem Corrugator zur Ausbildung der Strukturen des Wellrohrs.

Bei dem erfindungsgemäßen Verfahren zum Herstellen eines Wellrohrs sind die Schritte vorgesehen:
Extrudieren eines Ausgangsrohrs mittels eines Extruders,
Ausbilden von zumindest Wellen und Tälern mittels eines Corrugators, Vermessung des Wellrohrs mittels des erfindungsgemäßen THz-Messverfahrens, wobei in Abhängigkeit der Vermessung des Wellrohrs der Extruder und/oder der Corrugator angesteuert wird, zur Regelung des Herstellungsprozesses.

Bei einem Herstellungsprozess des Wellrohrs kann insbesondere online die Vermessung und Bewertung erfolgen, um den Extruder und/oder den Corrugator in Abhängigkeit der Bewertung anzusteuern, d.h. ein Regelverfahren auszubilden.

Die Erfindung wird im Folgenden anhand beiliegender Zeichnungen an einigen Ausführungsformen erläutert. Es zeigen:
- Fig. 1: ein Wellrohr im Längsschnitt und seine Anordnung in einer THz-Messeinrichtung,
- Fig. 2: die Fokussierung des THz-Strahls auf ein Wellrohr im Radialschnitt;
- Fig. 3: eine der Figur 2 entsprechende Darstellung im Längsschnitt bzw. Axialschnitt;
- Fig. 4: eine reversierende Verstellung des THz-Transceivers zur vollumfänglichen Vermessung; und
- Fig. 5: die Anordnung mehrerer THz-Transceiver um das Wellrohr.

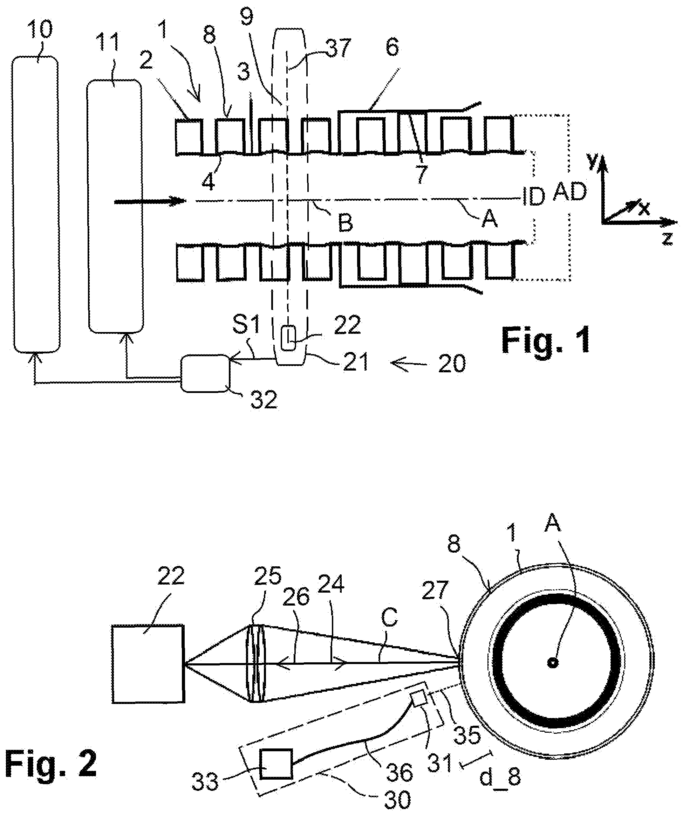

Ein Wellrohr 1 weist gemäß Figur 1 eine Längsachse A (Symmetrieachse) auf, die in z-Richtung bzw. Längsrichtung verläuft. In Längsrichtung bzw. Z-Richtung sind Wellen 2 und zwischen den Wellen 2 jeweils Täler 3 ausgebildet. Die hier gezeigten Ausbildungen stellen insbesondere Wellrohre 1 mit ringförmigen Wellen 2 dar; es können jedoch grundsätzlich auch helische (schraubenförmige, spiralförmige) Wellen ausgebildet werden.

Das Wellrohr 1 weist als Strukturen somit Wellen 2 und Täler, ergänzend vorteilhafterweise zusätzlich Außenmuffen (Bell) 6 und Fittings (Spigot, Innenmuffen) 7 auf. Das Fitting 7 dient insbesondere als Ringdichtungsaufnahme, d. h. insbesondere zur Aufnahme von Ringdichtungen und weist gegenüber den Wellen (Berg, Crown) einen größeren Außendurchmesser AD_7 auf. Die Außenmuffe 6 dient insbesondere zum Verlegen oder zur Befestigung des Wellrohrs 1.

Bei den hier gezeigten Ausbildungen ist vorteilhafterweise ein durchgängiges Innenrohr 4 ausgebildet, durch das Fluide geführt werden, ohne direkt an den Wellen 2 und Tälern 3 verwirbelt zu werden. Grundsätzlich sind jedoch auch Ausbildungen von Wellrohren 1 ohne durchgängiges Innenrohr 4 möglich, insbesondere zur Aufnahme von Kabeln und Leitungen im Innenraum.

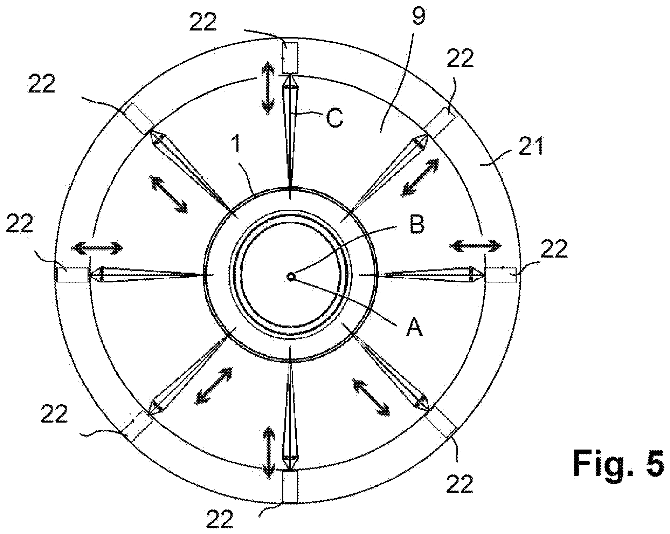

Das Wellrohr 1 ist aus Kunststoff, insbesondere einem thermoplastischen Kunststoff ausgebildet und wird z.B. durch zunächst einen Extruder 10 und einen anschließenden Wellform-ausbildenden Corrugator 11 kontinuierlich ausgebildet. Nach seiner Herstellung wird das Wellrohr 1 in Z-Richtung durch eine THz-Messvorrichtung 20 geführt und kontinuierlich online vermessen. Die THz-Messvorrichtung 20 weist z.B. ein rohrförmiges Gehäuse 21 mit einer Symmetrieachse B auf, so dass das Wellrohr 1 mit seiner Längsachse A entlang der Symmetrieachse B der THz-Messvorrichtung 20 geführt wird. An dem Gehäuse 21 sind ein oder mehrere THz-Transceiver 22 vorgesehen sind und jeweils radial nach innen, d. h. zur Symmetrieachse B ausgerichtet sind, wie z.B. auch in Fig. 5 gezeigt ist.

Der ein oder die mehreren THz-Transceiver 22 geben jeweils einen THz-Sendestrahl 24 entlang ihrer optischen Achse C aus, der auf die Symmetrieachse B ausgerichtet ist, d.h. senkrecht auf die Strukturen des Wellrohrs 1 steht. Der THz-Sendestrahl 24 wird durch eine optische Anordnung 25, insbesondere eine oder mehrere Linsen 25, auf einen kreisförmigen oder elliptischen Brennfleck 27 fokussiert. Die Linse 25 kann z.B. aus Silizium oder Kunststoff ausgebildet sein.

Zur Vermessung der einzelnen Komponenten des Wellrohrs 1 kann der Brennfleck 27 in Richtung der optischen Achse C bzw. in radialer Richtung verstellt werden, sodass der Brennfleck 27 jeweils auf den zu vermessenden Grenzflächen bzw. Bereichen liegt. Gemäß der hier gezeigten vorteilhaften Ausbildung ist die Brennweite fest ausgebildet. Somit wird ein Messabstand MT des Brennflecks 27 entlang der optischen Achse C eingestellt als Abstand des Brennflecks 27 von der Symmetrieachse B bzw. der Längsachse A.

Die Verstellung des Brennflecks 27, falls sie vorgesehen ist, erfolgt durch eine Fokussiereinrichtung 28, die den THz-Transceiver 22 mitsamt der optischen Ausbildung 25 entlang der optischen Achse C, d.h. in der XY-Ebene in radialer Richtung zur Symmetrieachse B, verstellt.

Der THz-Transceivers 22 verstellt, um die Ausdurchmesser AD der Wellen 2 sowie die Innendurchmesser ID des Innenrohrs 4, weiterhin auch die Schichtdicken des Wellrohrs 1 in sowohl den Wellen 2 als auch den Tälern 3 zu vermessen. So kann das Innenrohr 4 z.B. mehrschichtig ausgebildet sein, wobei bei Materialien mit unterschiedlichen Brechungsindices Schichtdicken der einzelnen Schichten vermessen werden können.

Die Ermittlung der jeweiligen Struktur in der xy-Messebene, um einen geeignete Messabstand MT des Brennflecks 27 von der Symmetrieachse einzustellen, erfolgt über eine Detektionseinrichtung 30, die somit eine VorMessung durchführt. Die Detektionseinrichtung 30 ist als optische Einrichtung, insbesondere mit einem Laser, z.B. Linien-Laser, oder auch als Radar-Sensor ausgebildet und detektiert einen Abstand d_8 der Außenfläche 8 des Wellrohrs1 in der xy-Messebene.

Eine Steuereinrichtung 32 der THz- Messvorrichtung 20 nimmt ein Messsignal S2 der Detektionseinrichtung 30 auf und ermittelt aus dem von der Detektionseinrichtung 30 ermittelten Abstand d_8, welche Struktur des Wellrohrs 1, d. h. eine Welle 2, ein Tal 3, oder eine Muffe 6 vorliegt. Bei der beispielhaft in Figur 1 gezeigten Ausbildung kann die Detektionseinrichtung 30 somit von außen z. B. die Muffe 6 detektieren, jedoch nicht das innenliegende Fitting 7.

Die Detektionseinrichtung 30 ist vorteilhafterweise derartig ausgelegt, dass ein Laserstrahl periodisch oder kontinuierlich in Z-Richtung abgelenkt wird. Hierzu kann die Detektionseinrichtung 30 einen Detektionskopf 31 aufweisen, zu dem z. B. ein Lichtleiterkabel 36 von einem Laser 33 geführt wird, und zur Verstellung einen verstellbaren Spiegel, z. B. als rotierender Spiegel 40 aufweisen, der somit den Laserstrahl 35 in Z-Richtung ablenkt, und zur Laser-Abstandsmessung (Lidar) die reflektierten Laserstrahlen wiederum aufnimmt und hieraus Abstände ermittelt.

Somit weist das erfindungsgemäße Verfahren die Schritte auf:
Das Wellrohr 1 wird als Prüfobjekt entlang der Symmetrieachse B der THz-Messvorrichtung 20 geführt - Schritt ST1,
in einer Vormessung wird mittels der Detektionseinrichtung 30 ein Abstand der Außenfläche des Wellrohrs 1 ermittelt- Schritt ST2,
aus dem ermittelten Abstand wird die jeweils in der Messebene 37 der THz-Transceiver 22 vorliegende Struktur ermittelt, d.h. z.B. Welle oder Tal, gegebenenfalls auch Fitting, Außenmuffe - Schritt ST3
optional: der Transceiver bzw. die mehreren Transceiver 22 können jeweils entlang ihrer optischen Achse C derartig verstellt werden, dass der jeweilige Brennfleck 27 geeignet auf einer zu vermessenden Fläche, insbesondere einer jeweils zu ermittelnde Grenzfläche der Struktur positioniert wird; hierzu steuert die Steuereinrichtung 32 die Fokussiereinrichtung 28 über Stellsignale S4 an - Schritt ST4 gemäß einer Ausführungsform; THz-Messung unter Ausgabe des THz-Sendestrahls 24 und Aufnahme der von Grenzflächen des Wellrohrs 1 reflektierten THz-Reflexionsstrahlen - Schritt ST5,
Ermittlung der Abstände und Schichtdicken aus der THz-Messung - Schritt ST6,
   Vergleich der ermittelten Abstände und Schichtdicken mit Referenzwerten und Ermittlung, ob ein Fehler vorliegt - ST7
gegebenenfalls Anzeige des Fehlers und/oder Ansteuerung des Extruders 10 und/oder Corrugators 11 zur Regelung und Korrektur der ermittelten Abstände und Schichtdicken - Schritt St8

Bei der Position der Muffe 6 in Fig. 1 kann der Brennfleck 27 somit zunächst z. B. auf die Muffe 6 gerichtet werden und z. B. an dieser Messposition auch die anliegende Fläche des Fittings 7 mit vermessen,
und nachfolgend der Transceiver 22 radial entlang der optischen Achse C nachgeführt werden zur Vermessung des darunterliegenden Innenrohrs 4.

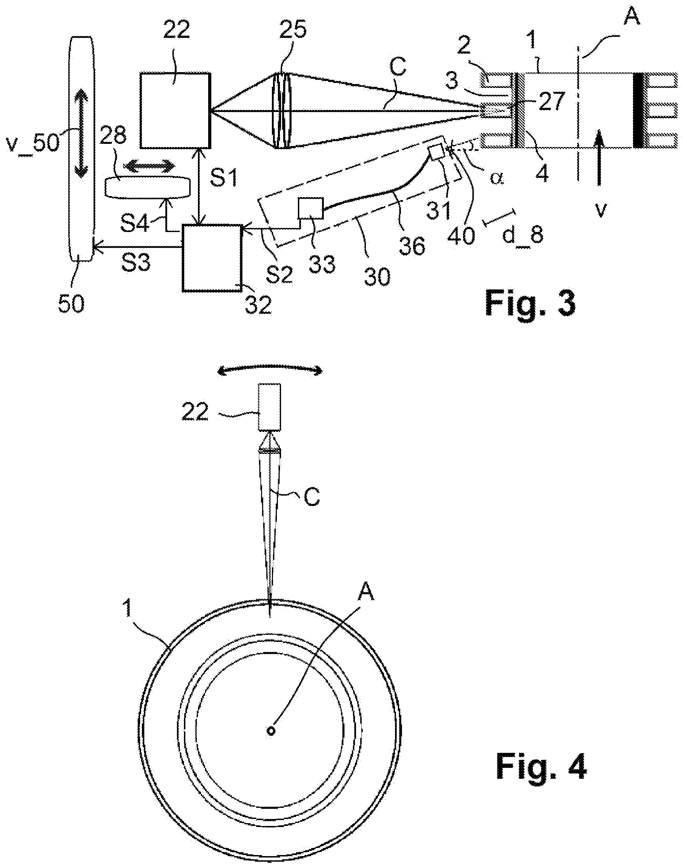

Gemäß Figur 4 kann der THz-Transceiver 2 bei der THz-Vermessung reversierend bzw. umlaufend um das Wellrohr 1 geführt werden, so dass bei hinreichender Drehgeschwindigkeit bzw. Reversiergeschwindigkeit des THz-Transceivers 22 eine vollumfängliche Vermessung möglich ist. Dies kann zusammen mit der Anordnung mehrerer THz-Transceiver 22 nach Fig. 5 vorgesehen sein.

Gemäß einer weiteren vorteilhaften Ausbildung wird berücksichtigt, dass insbesondere bei größeren Transportgeschwindigkeiten v des Wellrohrs 1 entlang der Z-Achse die vollumfängliche Vermessung zu zeitaufwändig ist, insbesondere bei sukzessiver Fokussierung auf die Welle 2 und das darunterliegende Innenrohr 4, und gegebenenfalls auch mit der zusätzlichen Reversion um das Wellrohr 1.

Somit kann gemäß dieser Ausführungsform die THz-Messvorrichtung 20 wie in Fig. 3 gezeigt einen in Z-Richtung bzw. entlang der Längsachse A oder Symmetrieachse B verstellbaren Schlitten 50 aufweisen, auf dem der oder die THz-Transceiver 22, vorteilhafterweise auch die Detektionseinrichtung 30, aufgenommen sind. Der Schlitten 50 verfährt mit einer Transportgeschwindigkeit v_50 entlang der Z-Richtung, so dass während dieser Verstell-Perioden eine größere Messzeit für die Verstellung des oder der THz-Transceiver 22, sowohl in Richtung der optischen Achse C als auch in Umfangsrichtung, verbleibt. Hierbei kann die Transportgeschwindigkeit v_50 insbesondere der Fördergeschwindigkeit v des Wellrohrs 1 entsprechen.

Somit ist bei einem derartigen Verfahren ergänzend in Schritt ST2 bis ST5 die Verstellung des Schlittens 50 in Z-Richtung vorgesehen, indem vorzugsweise die Steuereinrichtung 32 den Schlitten 50 mit Verstellsignalen S3 ansteuert.

Aus den direkten Messwerten der Abstände und Schichtdicken können nachfolgend indirekt abgeleitete Eigenschaftswerte ermittelt und vorzugsweise mit Vergleichswerten verglichen werden, z.B. die innere Rauigkeit,
weiterhin kann ein Messbericht mit statistisch ausgewerteten Messdaten erstellt werden.

### Bezugszeichenliste

- 1: Wellrohr
- 2: Welle (Berg, Crown)
- 3: Tal (Valley)
- 4: Innenrohr
- 6: Muffe (Außenmuffe, Bell)
- 7: Fitting, Spigot
- 8: Außenfläche des Wellrohrs 1, zu detektieren durch die Detektionseinrichtung 30
- 9: Messraum
- 10: Extruder
- 11: Corrugator
- 20: THz-Messvorrichtung
- 21: Gehäuse der Messvorrichtung, Messröhre
- 22: THz-Transceiver
- 24: THz-Sendestrahl
- 25: optische Anordnung, insbesondere Linse
- 26: THz- Reflexionsstrahl
- 27: Brennfleck, insbesondere kreisförmig oder elliptisch
- 28: Fokussiereinrichtung zur Verstellung des Transceivers 22
- 30: Detektionseinrichtung, insbesondere optische Detektionseinrichtung, z. B. Laser-Abstandsmesser oder Lidar
- 31: Detektionskopf der Detektionseinrichtung 30, zur Positionierung im Messraum oberhalb des Wellrohrs 1
- 32: Steuereinrichtung
- 33: Laser
- 35: Laserstrahl, durch rotierenden Spiegel 40 abgelenkt
- 36: Lichtleiterkabel
- 37: XY- Messebene
- 40: rotierender Spiegel
- 50: Schlitten, in Z-Richtung verfahrbar

- A: Längsachse des Wellrohrs 1
- B: Symmetrieachse der Messvorrichtung 22 und Gehäuse 21
- C: optische Achse des THz-Transceivers 22, in XY-Ebene verlaufend
- ID: Innendurchmesser des Wellrohrs 1
- AD: Außendurchmesser des Wellrohrs 1
- AD_7: Außendurchmesser am Fitting 7
- AD_6: Außendurchmesser an der Muffe 6

- v: Verstellgeschwindigkeit des Wellrohrs 1
- v_50: Verstellgeschwindigkeit des Schlittens 50
- X, Y, Z: Koordinaten, mit
- Z: Verstellrichtung/Symmetrierichtung senkrecht zur XY- Ebene

- S1: Messsignale des THz-Transceivers 22
- S2: Detektionssignal
- S3: Verstellsignal an Schlitten 50
- S4: Stellsignal an Fokussiereinrichtung 28

- d_8: Abstand der Außenfläche
- **MT**: Messabstand, Abstand des Brennflecks 27 von der Symmetrieachse B oder Längsachse A
- α: Schwenkwinkel der Detektionseinrichtung
- ST1- ST8: Schritte des Verfahrens

## Patentansprüche

1. Terahertz-Messvorrichtung (20) zum Vermessen eines Wellrohrs (1), wobei die THz-Messvorrichtung (20) mindestens aufweist:
ein Gehäuse (21) mit einem Messraum (9) zur Aufnahme eines Wellrohrs (1),
mindestens einen THz-Transceiver (22) zum Aussenden eines THz-Sendestrahls (24) entlang einer optischen Achse (C) in den Messraum (9) und Detektieren eines THz-Reflexionsstrahls (26),
eine Steuereinrichtung (32), die eingerichtet ist, Messsignale (S1) des mindestens einen THz-Transceivers (22) aufzunehmen,
eine Detektionseinrichtung (30), die eingerichtet ist, einen Abstand (d_8) und/oder eine Position einer Außenfläche (8) eines aufgenommenen Wellrohrs (1) zu ermitteln und ein Detektionssignal (S2) an die Steuereinrichtung (32) auszugeben,
eine optische Anordnung (25), durch die der vom THz-Transceiver (22) ausgesandte THz-Sendestrahl (24) auf einen in einem Messabstand (MT) ausgebildeten Brennfleck (27) fokussiert wird,
wobei die Steuereinrichtung (32) eingerichtet ist,
- aus den in den entlang der Längsrichtung des Wellrohrs ermittelten Detektionssignalen (S2) übermittelten Positionen oder Abständen (d_8) der Außenfläche (8) eines aufgenommenen Wellrohrs (1) eine Struktur des aufgenommenen Wellrohrs (1) in einer Messebene (37; XY) zu ermitteln und
- aus den Messsignalen (S1) Abstände und/oder Schichtdicken eines Wellrohres (1) zu ermitteln,
wobei die Steuereinrichtung (32) eingerichtet ist, als Struktur eines aufgenommenen Wellrohrs (1) in der Messebene (37) eines oder mehrere der folgenden Elemente aus den Detektionssignalen (S2) zu erkennen:
eine Welle (2), ein Tal (3).

2. THz-Messvorrichtung (20) nach Anspruch 1, **dadurch gekennzeichnet, dass** der Messabstand (MT) des Brennflecks (27) entlang der optischen Achse (C) statisch ist, insbesondere bei festem Abstand der optischen Anordnung (25) zu dem THz-Transceiver (22).

3. THz-Messvorrichtung (20) nach Anspruch 1, **dadurch gekennzeichnet, dass sie** eine Fokussiereinrichtung (28) zur Fokussierung des THz-Sendestrahls (24) und/oder zur Einstellung des Messabstandes (MT) des Brennflecks (27) des THz-Sendestrahls (24) entlang der optischen Achse (C) aufweist,
wobei die Steuereinrichtung (32) weiterhin eingerichtet ist,
- die Fokussiereinrichtung (28) zur Einstellung des Brennflecks (27) des mindestens einen THz-Transceivers (22) anzusteuern.

4. THz-Messvorrichtung (20) nach Anspruch 3, **dadurch gekennzeichnet, dass** die Fokussiereinrichtung (28) den Messabstand (MT) des Brennflecks (27) entlang der optischen Achse (C) einstellt, durch Verstellung des THz-Transceivers (22) mitsamt der optischen Anordnung (25), bei festem Abstand der optischen Anordnung (25) zu dem THz-Transceiver (22).

5. THz-Messvorrichtung (20) nach Anspruch 4, **dadurch gekennzeichnet, dass** die Steuereinrichtung (32) eingerichtet ist, in Abhängigkeit der ermittelten Struktur die Fokussiereinrichtung (28) anzusteuern, um einen oder mehrere Messabstände (MT) einzustellen, z. B. bei einer Welle (2) einen äußeren Messabstand (MT) für eine äußere Messung an der ermittelten Außenfläche (8) und mindestens einen inneren Messabstand (MT) für eine innere Messung an einem Innenrohr (4), und bei einem Tal (3) einen Messabstand (MT) für eine Messung am Innenrohr (4).

6. THz-Messvorrichtung (20) nach einem der vorherigen Ansprüche,
**dadurch gekennzeichnet, dass** die Steuereinrichtung (32) eingerichtet ist, als Struktur eines aufgenommenen Wellrohrs (1) in der Messebene (37) eines oder mehrere der folgenden Elemente zu erkennen:
ein Fitting (7), insbesondere als Aufnahme einer Ringdichtung, oder eine Außenmuffe (6).

7. THz-Messvorrichtung (20) nach einem der vorherigen Ansprüche,
**dadurch gekennzeichnet, dass** die Steuereinrichtung (20) eingerichtet ist, aus den ein oder mehreren Messungen des THz-Transceivers (2) mindestens einen der folgenden Messwerte zu ermitteln:
einen Außendurchmesser (AD) an einer Welle (2) und/oder an einem Fitting (7) und/oder an einer Muffe (6),
einen Innendurchmesser (ID) eines Tals (3) und/oder einer Welle (2) und/oder eines Fittings (7) und/oder einer Muffe (6),
Wanddicken einer Außenwand der Welle (2) und/oder eines Innenrohrs (4),
Dicken einer Luftschicht einer Welle (2) zwischen Innenrohr und Außenwand.

8. THz-Messvorrichtung (20) nach einem der vorherigen Ansprüche,
**dadurch gekennzeichnet, dass** die Steuereinrichtung (20) eingerichtet ist, aus den Messwerten nachfolgend weitere Dimensionsgrößen oder Eigenschaften des Wellrohrs (1) zu ermitteln, insbesondere eine innere Rauheit als Differenz oder Unterschied zwischen den Innendurchmessern (ID_4, ID_3) an verschiedenen Strukturpositionen (2, 3) des Wellrohrs (1).

9. THz-Messvorrichtung (20) nach einem der vorherigen Ansprüche,
**dadurch gekennzeichnet, dass** die Detektionseinrichtung (30) einen Laser, insbesondere einen Linienlaser, und/oder einen Radar-Sensor zur Messung des Abstands (d_8) der Außenfläche (8) aufweist.

10. THz-Messvorrichtung (20) nach Anspruch 9, **dadurch gekennzeichnet, dass** die Detektionseinrichtung (30) einen Detektionskopf (31) aufweist, der eingerichtet ist zur variablen Ausgabe eines Laserstrahls oder Linienlasers in einem Schwenkwinkel (alpha) entlang der Symmetrieachse (B), z. B. durch einen um schwenkbaren oder rotierenden Spiegel (40).

11. THz-Messvorrichtung (20) nach einem der vorherigen Ansprüche,
**dadurch gekennzeichnet, dass** mehrere THz-Transceiver (22) an dem Gehäuse (21) in Umfangsrichtung um die Symmetrieachse (B) des Messraums (9) angeordnet sind,
wobei die optischen Achsen (C) der mehreren THz-Transceiver (22) zu dem Messraum oder der Symmetrieachse (B) des Messraums (9) ausgerichtet sind, vorzugsweise in einer gemeinsamen Messebene (37).

12. THz-Messvorrichtung (20) nach einem der vorherigen Ansprüche,
**dadurch gekennzeichnet, dass** der mindestens eine THz-Transceiver (22) an dem Gehäuse (21) in Umfangsrichtung um den Messraum (9) reversierend oder umlaufend angeordnet ist, zur vollumfänglichen Vermessung eines aufgenommenen Wellrohrs (1), vorzugsweise in der Messebene (37) oder schraubenförmig um den Messraum (9).

13. THz-Messvorrichtung (20) nach einem der vorherigen Ansprüche,
**dadurch gekennzeichnet, dass sie** einen entlang einer Förderrichtung (Z) und/oder Symmetrieachse (B) verstellbarer Schlitten (50) aufweist,
wobei der mindestens eine THz-Transceiver (22), vorzugsweise auch die Detektionseinrichtung (30), an dem Schlitten (50) aufgenommen ist,
zur Längsverstellung des Schlittens (50) bei Vermessung eines Wellrohrs (1) mit einer Transportgeschwindigkeit (v_50), insbesondere der Transportgeschwindigkeit des Wellrohrs (1), insbesondere zur periodischen Verstellung des Schlittens (50) in wiederholten Verstellvorgängen.

14. THz-Messverfahren zum Vermessen eines Wellrohrs (1), insbesondere eines aus einem Kunststoff ausgebildeten Wellrohrs (1), mit mindestens folgenden Schritten:
Fördern eines Wellrohrs (1), das Wellen (2) und zwischen den Wellen (2) ausgebildete Täler (3) aufweist, in einer Transportrichtung (z) durch eine Messebene (37) in einem Messraum (9) einer THz-Messvorrichtung (20) (ST1),
Vormessung mittels einer Detektionseinrichtung (20), die eine Position oder einen Abstand (d_8) einer Außenfläche (8) des Wellrohrs (1) fortlaufend ermittelt (ST2),
Ermitteln einer Struktur (2, 3, 6, 7) des Wellrohrs (1) in der Messebene (37) aus der ermittelten Position oder dem ermittelten Abstand (d_8) (ST3),
THz-Messung unter Aussenden eines THz-Sendestrahls (24) entlang der optischen Achse (C), Fokussierung auf einen Brennfleck (27) und Detektion eines THz-Reflexionsstrahls (26) (ST5), und
Ermittlung mindestens eines Abstands einer Grenzfläche und/oder mindestens einer Schichtdicke des Wellrohrs (1) aus der THz-Messung (ST6),
wobei als Struktur in der Messebene (37, XY) eine Welle (2) und/oder ein Tal (3) ermittelt wird,
wobei aus den mittels der Detektionseinrichtung fortlaufend ermittelten Positionen oder Abständen als Struktur in der Messebene (37, XY) eine Welle (2) und/oder ein Tal (3) erkannt wird, und wobei nachfolgend der Messabstand (MT) des Brennflecks des THz-Sendestrahls (24) auf ein oder mehrere Grenzflächen der ermittelten Struktur eingestellt wird.

15. Verfahren nach Anspruch 14, **dadurch gekennzeichnet, dass** die Messebene (37) senkrecht zur Förderrichtung und/oder senkrecht zu einer Längsachse (A) des Wellrohrs (1) und/oder senkrecht zu einer Symmetrieachse (B) der THz-Messvorrichtung (20) liegt.

16. Verfahren nach Anspruch 14 oder 15, **dadurch gekennzeichnet, dass** als Struktur in der Messebene (37, XY) weiterhin ermittelt wird eine Muffe (6) oder ein Fitting (7) des Wellrohrs (1),
wobei nachfolgend der Messabstand (MT) des Brennflecks des THz-Sendestrahls (24) auf ein oder mehrere Grenzflächen der ermittelten Struktur eingestellt wird.

17. Verfahren nach einem der Ansprüche 14 bis 16, **dadurch gekennzeichnet, dass** ein oder mehrere der folgenden Ermittlungen durchgeführt werden:
bei Detektion der Struktur einer Welle (2) wird sowohl ein Abstand und/oder eine Schichtdicke einer Außenwand der Welle (2) als auch ein Abstand und/oder eine Schichtdicke einer inneren Fläche, z. B. des Innenrohrs (4) der Welle (2) ermittelt,
bei Detektion der Struktur eines Tals (3) wird ein Abstand und/oder eine Schichtdicke einer inneren Fläche, z. B. des Innenrohrs (4) der Welle (2) ermittelt,
bei Detektion der Struktur eines Fittings (7) wird ein Abstand und/oder eine Schichtdicke sowohl einer Außenschicht des Fittings (7) als auch einer inneren Schicht, z.B. des Innenrohrs (4), des Fittings (7) ermittelt,
und/oder
bei Detektion der Struktur einer Außenmuffe (6) wird ein Abstand und/oder eine Schichtdicke der Außenmuffe (6) und weiterhin Abstände und/oder Schichtdicken unterhalb der Außenmuffe (6) vorgesehener Strukturen ermittelt,
aus ermittelten Abständen oder Schichtdicken werden indirekte Eigenschaftswerte ermittelt, z.B. eine innere Rauigkeit.

18. Verfahren nach einem der Ansprüche 14 bis 17, **dadurch gekennzeichnet, dass**
nach dem Ermitteln der Struktur (St3)
- der Schritt erfolgt des Einstellens eines Brennflecks (27) mindestens eines THz-Transceivers (22) entlang seiner optischen Achse (C) auf einen Messabstand (MT) in Abhängigkeit der ermittelten Struktur (2, 3, 6, 7) des Wellrohrs (1) in der Messebene (37), (ST4)

19. Verfahren nach Anspruch 18, **dadurch gekennzeichnet, dass** zur Einstellung des Messabstandes (MT) entlang der optischen Achse (C) ein Abstand einer zur Fokussierung des Sendestrahls (24) vorgesehenen optischen Anordnung (25), z.B. Linse, von dem THz-Transceiver (22) fest bleibt und der THz-Transceiver (22) mitsamt der optischen Anordnung (25) verstellt wird.

20. Verfahren nach einem der Ansprüche 14 bis 19, **dadurch gekennzeichnet, dass** der mindestens eine THz-Transceiver (22) um das Wellrohr (1) in Umfangsrichtung umlaufend reversiert oder rotiert wird, zur vollumfänglichen Vermessung des Wellrohrs (1).

21. Verfahren nach einem der Ansprüche 14 bis 20, **dadurch gekennzeichnet, dass** bei der Vormessung und/oder THz-Messung der mindestens eine THz-Transceiver (22) zyklisch in Längsrichtung oder Förderrichtung des Wellrohrs (1) mittransportiert wird, z. B. mittels eines Schlittens, zur Vermessung der erfassten Struktur des Wellrohrs (1).

22. Verfahren nach einem der Ansprüche 14 bis 21, **dadurch gekennzeichnet, dass** die ermittelten Abstände und Schichtdicken aus der THz-Messung und/oder hieraus ermittelten indirekte Eigenschaftswerten mit Referenzwerten verglichen werden und ermittelt wird, ob ein Fehler vorliegt (ST7), gegebenenfalls mit Anzeige des Fehlers oder Ausgabe eines Steuersignals für einen Herstellungsprozess (ST8).

## Claims

1. Terahertz measuring device (20) for measuring a corrugated pipe (1),
the THz measuring device (20) comprising at least:
a housing (21) including a measuring space (9) for accommodating a corrugated pipe (1),
at least one THz transceiver (22) for emitting a THz transmission beam (24) along an optical axis (C) into the measuring space (9) and detecting a reflected THz beam (26),
a controller device (32) adapted to receive measuring signals (S1) of said at least one THz transceiver (22),
a detecting means (30) adapted to determine a distance (d_8) and/or a position of an exterior surface (8) of an accommodated corrugated pipe (1) and to put out a detection signal (S2) to the controller device (32),
an optical arrangement (25) by means of which the THz transmission beam (24) emitted from the THz transceiver (22) is focused onto a focal point (27) formed at a measuring distance (MT),
the controller device (32) being adapted to
- determine a structure of the accommodated corrugated pipe (1) in a measuring plane (37; XY) from the positions or distances (d_8) of the exterior surface (8) of an accommodated corrugated pipe (1) communicated in the detection signals (S2) determined along the longitudinal direction of the corrugated pipe, and
- determine distances and/or layer thicknesses of a corrugated pipe (1) from the measuring signals (S1),
the controller device (32) being adapted to recognise from the detection signals (S2) one or more of the following elements as the structure of an accommodated corrugated pipe (1) in the measuring plane (37): a wave (2), a trough (3).

2. THz measuring device (20) according to claim 1, **characterized in that** the measuring distance (MT) of the focal point (27) is static along the optical axis (C), in particular, at a fixed distance of the optical arrangement (25) to the THz transceiver (22).

3. THz measuring device (20) according to claim 1, **characterized in that** it comprises a focusing means (28) for focusing the THz transmission beam (24) and/or for adjusting the measuring distance (MT) of the focal point (27) of the THz transmission beam (24) along the optical axis (C),
the controller device (32) further being adapted to
- control the focusing means (28) for adjusting the focal point (27) of the at least one THz transceiver (22).

4. THz measuring device (20) according to claim 3, **characterized in that** the focusing means (28) adjusts the measuring distance (MT) of the focal point (27) along the optical axis (C) by adjusting the THz transceiver (22) together with the optical arrangement (25), while having a fixed distance of the optical arrangement (25) to the THz transceiver (22).

5. THz measuring device (20) according to claim 4, **characterized in that** the controller device (32) is adapted to control the focusing means (28) depending on the determined structure to set one or more measuring distances (MT), e.g. in the case of a wave (2), an outer measuring distance (MT) for an exterior measurement on the determined exterior surface (8) and at least one inner measuring distance (MT) for an interior measurement on an inner tube (4), and in the case of a trough (3), a measuring distance (MT) for a measurement on the inner tube (4).

6. THz measuring device (20) according to one of the above claims,
**characterized in that** the controller device (32) is adapted to detect, as structure of an accommodated corrugated pipe (1) in the measuring plane (37), one or more of the following elements:
a fitting (7), in particular, as receptacle of a ring seal, or
an external sleeve (6).

7. THz measuring device (20) according to one of the above claims,
**characterized in that** the controller device (32) is adapted to determine, from said one or more measurements of the THz transceiver (2), at least one of the following measuring values:
an exterior diameter (AD) on a wave (2) and/or on a fitting (7) and/or on a sleeve (6),
an interior diameter (ID) of a trough (3) and/or a wave (2) and/or a fitting (7) and/or a sleeve (6),
wall thicknesses of an exterior wall of the wave (2) and/or an inner pipe (4),
thicknesses of an air gap of a wave (2) between the inner tube and the exterior wall.

8. THz measuring device (20) according to one of the above claims,
**characterized in that** the controller device (32) is adapted to subsequently determine from the measuring values further dimension values or characteristics of the corrugated pipe (1), in particular, an inner roughness as difference or distinction between the inner diameters (ID_4, ID_3) at various structure positions (2, 3) of the corrugated pipe (1).

9. THz measuring device (20) according to one of the above claims,
**characterized in that** the detecting means (30) comprises a laser, in particular, a line laser, and/or a radar sensor for measuring the distance (d_8) of the exterior surface (8).

10. THz measuring device (20) according to claim 9, **characterized in that** the detecting means (30) comprises a detector head (31) which is adapted for a variable output of a laser beam or line laser at a pivot angle (alpha) along the axis of symmetry (B), e.g., via a pivoting or rotating mirror (40).

11. THz measuring device (20) according to one of the above claims,
**characterized in that** a plurality of THz transceivers (22) are arranged on the housing (21) in the circumferential direction around the axis of symmetry (B) of the measuring space (9),
the optical axes (C) of said plurality of THz transceivers (22) being aligned towards the measuring space or the axis of symmetry (B) of the measuring space (9), preferably in a common measuring plane (37).

12. THz measuring device (20) according to one of the above claims,
**characterized in that** the at least one THz transceiver (22) is arranged on the housing (21) reversing or rotating in the circumferential direction around the measuring space (9), so as to measure the entire circumference of an accommodated corrugated pipe (1), preferably in the measuring plane (37) or helical around the measuring space (9).

13. THz measuring device (20) according to one of the above claims,
**characterized in that** it comprises a slide (50) adjustable along a transport direction (Z) and/or axis of symmetry (B), said at least one THz transceiver (22), and preferably the detecting means (30) too, being accommodated at the slide (50),
for longitudinal adjustment of the slide (50) when measuring a corrugated pipe (1) at a transport velocity (v_50), in particular, the transport velocity of the corrugated pipe (1), in particular, for periodic adjustment of the slide (50) in repeated adjustment manoeuvres.

14. THz measuring method for measuring of a corrugated pipe (1), in particular, a corrugated pipe (1) made of a plastic material, including at least the following steps:
transporting a corrugated pipe (1) comprising waves (2) and troughs (3) formed in-between the waves (2) in a transport direction (z) through a measuring plane (37) in a measuring space (9) of a THz measuring device (20) (ST1),
pre-measuring by means of a detecting means (20) which continuously determines a position or a distance (d_8) of an exterior surface (8) of the corrugated pipe (1) (ST2),
determining a structure (2, 3, 6, 7) of the corrugated pipe (1) in the measuring plane (37) from the determined position or the determined distance (d_8) (ST3),
THz measurement involving emitting a THz transmission beam s (24) along the optical axis (C), focusing onto the focal point (27), and detecting a reflected THz beam (26) (ST5), and
determining at least one distance of a boundary surface and/or at least one layer thickness of the corrugated pipe (1) from the THz measurement (ST6),
where a wave (2) and/or a trough (3) is determined as the structure in the measuring plane (37, XY),
where, from the positions or distances continuously determined in the measuring place (37, XY) by means of the detection means, a wave (2) and/or a trough (3) is determined, and where, subsequently, the measuring distance (MT) of the focal point of the THz transmission beam (24) is adjusted to one or more boundary surfaces of the determined structure.

15. Method according to claim 14, **characterized in that**
the measuring plane (37) lies perpendicular to the conveying direction and/or perpendicular to a longitudinal axis (A) of the corrugated pipe (1) and/or perpendicular to an axis of symmetry (B) of the THz measuring device (20).

16. Method according to claim 14 or 15, **characterized in that**
the following is further determined as structure in the measuring plane (37, XY):
a sleeve (6) or a fitting (7) of the corrugated pipe (1),
where, subsequently, the measuring distance (MT) of the focal point of the THz transmission beam (24) is adjusted to one or more boundary surfaces of the determined structure.

17. Method according to one of the claims 14 through 16, **characterized in that** one or more of the following determinations are made:
upon detection of the structure of a wave (2), both a distance and/or a layer thickness of an exterior wall of the wave (2) and a distance and/or a layer thickness of an inner surface, e.g. the inner pipe (4) of the wave (2) are determined,
upon detection of the structure of a trough (3), a distance and/or a layer thickness of an inner surface, e.g. the inner pipe (4) of the wave (2) is determined,
upon detection of the structure of a fitting (7), a distance and/or a layer thickness of both an exterior layer of the fitting (7) and an inner layer, e.g., of the inner pipe (4), of the fitting (7) is determined, and/or
upon detection of the structure of an exterior sleeve (6), a distance and/or a layer thickness of the exterior sleeve (6) and further distances and/or
layer thicknesses below the exterior sleeve (6) of provided structures are determined,
indirect characteristics, e.g., an inner roughness, are determined from determined distances or layer thicknesses.

18. Method according to one of the claims 14 through 17, **characterized in that**
after determination of the structure (St3)
- follows the step of adjusting a focal point (27) of at least one THz transceiver (22) along its optical axis (C) to a measuring distance (MT) depending on the determined structure (2, 3, 6, 7) of the corrugated pipe (1) in the measuring plane (37), (ST4)

19. Method according to claim 18, **characterized in that** for adjusting the measuring distance (MT) along the optical axis (C) a distance of an optical arrangement (25), e.g., lens, provided for focusing the transmission beam (24) of the THz transceiver (22) remains fixed, and the THz transceiver (22) is adjusted together with the optical arrangement (25).

20. Method according to one of the claims 14 through 19, **characterized in that** the at least one THz transceiver (22) reverses or rotates circumferentially around the corrugated pipe (1) in the circumferential direction, so as to measure the entire circumference of the corrugated pipe (1).

21. Method according to one of the claims 14 through 20, **characterized in that** upon pre-measuring and/or THz measuring the at least one THz transceiver (22) is transported along cyclically in the longitudinal direction or conveying direction of the corrugated pipe (1), e.g., by means of a slide, for measuring the detected structure of the corrugated pipe (1).

22. Method according to one of the claims 14 through 21, **characterized in that** the determined distances and layer thicknesses from the THz measurement and/or indirect characteristics determined there from are compared to reference values and it is determined whether there is an error (ST7), optionally with displaying the error or output of a control signal for a manufacturing process (ST8).

## Revendications

1. Dispositif (20) de mesure térahertz pour mesurer un tube ondulé (1), le dispositif (20) de mesure THz comprenant au moins :
un boîtier (21) doté d'un espace de mesure (9) pour la réception du tube ondulé (1),
au moins un émetteur-récepteur THz (22) pour émettre un faisceau (24) d'émission THz le long d'un axe optique (C) dans l'espace de mesure (9) et détecter un faisceau (26) de réflexion THz,
un dispositif de commande (32) qui est conçu pour recevoir des signaux de mesure (S1) provenant de l'au moins un émetteur-récepteur THz (22),
un dispositif de détection (30) qui est conçu pour déterminer une distance (d_8) et/ou une position d'une surface extérieure (8) d'un tuyau ondulé (1) reçu et pour émettre un signal de détection (S2) vers le dispositif de commande (32),
un agencement optique (25) à travers lequel le faisceau (24) d'émission THz émis par l'émetteur-récepteur THz (22) est focalisé sur un point focal (27) formé à une distance de mesure (MT),
dans lequel le dispositif de commande (32) est conçu pour
- à partir des positions ou distances (d_8) de la surface extérieure (8) d'un tube ondulé (1) reçu, transmises dans les signaux de détection (S2) déterminés le long de la direction longitudinale du tube ondulé, déterminer une structure du tube ondulé (1) reçu dans un plan de mesure (37 ; XY) et
- à partir des signaux de mesure (S1), déterminer les distances et/ou les épaisseurs de couche d'un tube ondulé (1),
dans lequel le dispositif de commande (32) est conçu pour reconnaître, en tant que structure d'un tube ondulé (1) reçu dans le plan de mesure (37), un ou plusieurs des éléments suivants à partir des signaux de détection (S2) :
une ondulation (2), un creux (3).

2. Dispositif (20) de mesure THz selon la revendication 1, **caractérisé en ce que** la distance de mesure (MT) du point focal (27) le long de l'axe optique (C) est statique, en particulier selon une distance fixe entre l'agencement optique (25) et l'émetteur-récepteur THz (22) est fixe.

3. Dispositif (20) de mesure THz selon la revendication 1, **caractérisé en ce qu'**il comprend un dispositif de focalisation (28) pour focaliser le faisceau (24) d'émission THz et/ou pour régler la distance de mesure (MT) du point focal (27) du faisceau (24) d'émission THz le long de l'axe optique (C),
dans lequel le dispositif de commande (32) est en outre conçu pour
- commander le dispositif de focalisation (28) pour régler le point focal (27) de l'au moins un émetteur-récepteur THz (22).

4. Dispositif (20) de mesure THz selon la revendication 3, **caractérisé en ce que** le dispositif de focalisation (28) règle la distance de mesure (MT) du point focal (27) le long de l'axe optique (C), en déplaçant l'émetteur-récepteur THz (22) conjointement avec l'agencement optique (25), selon une distance fixe entre l'agencement optique (25) et l'émetteur-récepteur THz (22).

5. Dispositif (20) de mesure THz selon la revendication 4, **caractérisé en ce que** le dispositif de commande (32) est conçu pour commander le dispositif de focalisation (28) en fonction de la structure déterminée afin de régler une ou plusieurs distances de mesure (MT), par exemple, dans le cas d'une ondulation (2), une distance de mesure (MT) extérieure pour une mesure extérieure sur la surface extérieure (8) déterminée et au moins une distance de mesure (MT) intérieure pour une mesure intérieure sur un tube intérieur (4), et dans le cas d'un creux (3), une distance de mesure (MT) pour une mesure sur le tube intérieur (4).

6. Dispositif (20) de mesure THz selon l'une des revendications précédentes, **caractérisé en ce que** le dispositif de commande (32) est conçu pour reconnaître, en tant que structure d'un tube ondulé (1) reçu dans le plan de mesure (37), un ou plusieurs des éléments suivants :
un raccord (7), en particulier en tant que logement pour un joint torique, ou un manchon extérieur (6).

7. Dispositif (20) de mesure THz selon l'une des revendications précédentes, **caractérisé en ce que** le dispositif de commande (20) est conçu pour déterminer, à partir des une ou plusieurs mesures de l'émetteur-récepteur THz (2), au moins l'une des valeurs mesurées suivantes :
un diamètre extérieur (AD) sur une ondulation (2) et/ou sur un raccord (7) et/ou sur un manchon (6),
un diamètre intérieur (ID) d'un creux (3) et/ou d'une ondulation (2) et/ou d'un raccord (7) et/ou d'un manchon (6),
les épaisseurs de paroi d'une paroi extérieure de l'ondulation (2) et/ou d'un tube intérieur (4),
les épaisseurs d'une couche d'air d'une ondulation (2) entre le tube intérieur et la paroi extérieure.

8. Dispositif (20) de mesure THz selon l'une des revendications précédentes, **caractérisé en ce que** le dispositif de commande (20) est conçu pour déterminer ultérieurement d'autres dimensions ou propriétés du tube ondulé (1) à partir des valeurs mesurées, en particulier une rugosité interne sous forme de différence ou d'écart entre les diamètres intérieurs (ID_4, ID_3) à différentes positions structurelles (2, 3) du tube ondulé (1).

9. Dispositif (20) de mesure THz selon l'une des revendications précédentes, **caractérisé en ce que** le dispositif de détection (30) comprend un laser, en particulier un laser à ligne, et/ou un capteur radar pour mesurer la distance (d_8) de la surface extérieure (8).

10. Dispositif (20) de mesure THz selon la revendication 9, **caractérisé en ce que** le dispositif de détection (30) comprend une tête de détection (31) qui est conçue pour émettre de manière variable un faisceau laser ou un laser à ligne selon un angle de pivotement (alpha) le long de l'axe de symétrie (B), par exemple par un miroir pivotant ou rotatif (40).

11. Dispositif (20) de mesure THz selon l'une des revendications précédentes, **caractérisé en ce que** plusieurs émetteurs-récepteurs THz (22) sont agencés sur le boîtier (21) dans la direction circonférentielle autour de l'axe de symétrie (B) de l'espace de mesure (9),
dans lequel les axes optiques (C) des plusieurs émetteurs-récepteurs THz (22) sont alignés avec l'espace de mesure ou l'axe de symétrie (B) de l'espace de mesure (9), de préférence dans un plan de mesure (37) commun.

12. Dispositif (20) de mesure THz selon l'une des revendications précédentes, **caractérisé en ce que** l'au moins un émetteur-récepteur THz (22) est agencé sur le boîtier (21) dans la direction circonférentielle autour de l'espace de mesure (9) de manière réversible ou rotative, pour mesurer un tube ondulé (1) reçu sur toute sa circonférence, de préférence dans le plan de mesure (37) ou de manière hélicoïdale autour de l'espace de mesure (9).

13. Dispositif (20) de mesure THz selon l'une des revendications précédentes, **caractérisé en ce qu'**il comprend un chariot (50) réglable le long d'une direction de transport (Z) et/ou d'un axe de symétrie (B), dans lequel l'au moins un émetteur-récepteur THz (22), de préférence également le dispositif de détection (30), est reçu sur le chariot (50) pour le déplacement longitudinal du chariot (50) lors de la mesure d'un tube ondulé (1) avec une vitesse de transport (v_50), en particulier la vitesse de transport du tube ondulé (1), en particulier pour le déplacement périodique du chariot (50) lors de processus de déplacement répétés.

14. Procédé de mesure THz pour mesurer un tube ondulé (1), en particulier un tube ondulé (1) en matière plastique, comprenant au moins les étapes suivantes :
transport d'un tube ondulé (1), qui présente des ondulations (2) et des creux (3) formés entre les ondulations (2), dans une direction de transport (z) à travers un plan de mesure (37) dans un espace de mesure (9) d'un dispositif (20) de mesure **THz** (ST1),
pré-mesure au moyen d'un dispositif de détection (20) qui détermine en continu une position ou une distance (d_8) d'une surface extérieure (8) du tube ondulé (1) (ST2),
détermination d'une structure (2, 3, 6, 7) du tube ondulé (1) dans le plan de mesure (37) à partir de la position ou de la distance (d_8) déterminée (ST3),
mesure THz avec émission d'un faisceau (24) d'émission THz le long de l'axe optique (C), focalisation sur un point focal (27) et détection d'un faisceau (26) de réflexion THz (ST5), et
détermination d'au moins une distance d'une interface et/ou d'au moins une épaisseur de couche du tube ondulé (1) à partir de la mesure THz (ST6),
dans lequel une ondulation (2) et/ou un creux (3) sont déterminés en tant que structure dans le plan de mesure (37, XY),
dans lequel une ondulation (2) et/ou un creux (3) sont détectés à partir des positions ou distances déterminées en continu au moyen du dispositif de détection en tant que structure dans le plan de mesure (37, XY), et dans lequel la distance de mesure (MT) du point focal du faisceau (24) d'émission THz est ensuite réglée sur une ou plusieurs interfaces de la structure déterminée.

15. Procédé selon la revendication 14, **caractérisé en ce que** le plan de mesure (37) est perpendiculaire à la direction de transport et/ou perpendiculaire à un axe longitudinal (A) du tube ondulé (1) et/ou perpendiculaire à un axe de symétrie (B) du dispositif (20) de mesure THz.

16. Procédé selon la revendication 14 ou 15, **caractérisé en ce qu'**est déterminé en outre, en tant que structure dans le plan de mesure (37, XY), un manchon (6) ou un raccord (7) du tube ondulé (1),
dans lequel la distance de mesure (MT) du point focal du faisceau (24) d'émission THz est ensuite réglée sur une ou plusieurs interfaces de la structure déterminée.

17. Procédé selon l'une des revendications 14 à 16, **caractérisé en ce qu'**une ou plusieurs des déterminations suivantes sont réalisées :
lors de la détection de la structure d'une ondulation (2), sont déterminées à la fois une distance et/ou une épaisseur de couche d'une paroi extérieure de l'ondulation (2) ainsi qu'une distance et/ou une épaisseur de couche d'une surface intérieure, par exemple du tube intérieur (4) de l'ondulation (2),
lors de la détection de la structure d'un creux (3), sont déterminées une distance et/ou une épaisseur de couche d'une surface intérieure, par exemple du tube intérieur (4) de l'ondulation (2),
lors de la détection de la structure d'un raccord (7), sont déterminées une distance et/ou une épaisseur de couche d'une couche extérieure du raccord (7) ainsi que d'une couche intérieure, par exemple du tube intérieur (4), du raccord (7), et/ou
lors de la détection de la structure d'un manchon extérieur (6), sont déterminées une distance et/ou une épaisseur de couche du manchon extérieur (6) et, en outre, les distances et/ou les épaisseurs de couche de structures prévues sous le manchon extérieur (6),
à partir des distances ou des épaisseurs de couche déterminées, des valeurs de propriétés indirectes sont déterminées, par exemple une rugosité interne.

18. Procédé selon l'une des revendications 14 à 17, **caractérisé en ce que**
après avoir déterminé la structure (St3)
- l'étape consiste à régler un point focal (27) d'au moins un émetteur-récepteur THz (22) le long de son axe optique (C) à une distance de mesure (MT) en fonction de la structure (2, 3, 6, 7) déterminée du tube ondulé (1) dans le plan de mesure (37), (ST4).

19. Procédé selon la revendication 18, **caractérisé en ce que**, pour régler la distance de mesure (MT) le long de l'axe optique (C), une distance d'un agencement optique (25), par exemple une lentille, prévu pour focaliser le faisceau (24) d'émission, à l'émetteur-récepteur THz (22) reste fixe et l'émetteur-récepteur THz (22) est déplacé conjointement avec l'agencement optique (25).

20. Procédé selon l'une des revendications 14 à 19, **caractérisé en ce que** l'au moins un émetteur-récepteur THz (22) sont inversés ou tournés autour du tube ondulé (1) dans la direction circonférentielle pour mesurer le tube ondulé (1) sur toute sa circonférence.

21. Procédé selon l'une des revendications 14 à 20, **caractérisé en ce que**, lors de la pré-mesure et/ou de la mesure THz, l'au moins un émetteur-récepteur THz (22) est transporté cycliquement dans la direction longitudinale ou dans la direction de transport du tube ondulé (1), par exemple au moyen d'un chariot, pour mesurer la structure détectée du tube ondulé (1).

22. Procédé selon l'une des revendications 14 à 21, **caractérisé en ce que** les distances et les épaisseurs de couche déterminées à partir de la mesure THz et/ou des valeurs de propriétés indirectes déterminées à partir de celles-ci sont comparées à des valeurs de référence et il est déterminé s'il existe un défaut (ST7), le cas échéant avec affichage du défaut ou émission d'un signal de commande pour un processus de fabrication (ST8).
